# EUROPEAN PATENT APPLICATION

(11) **EP 4 826 744 A1**
(43) Date of publication of application: **21.10.2026**
(21) Application number: 24903605.4
(22) Date of filing: 05.12.2024
(51) Int. Cl.: H01B 13/00, C01B 25/14, H01B 1/06, H01B 1/10, H01M 10/0562

(54) **METHOD FOR PRODUCING SULFIDE SOLID ELECTROLYTE AND SULFIDE SOLID ELECTROLYTE**

(30) Priority: 15.12.2023 JP 2023212391
(71) Applicant: AGC Inc., Chiyoda-ku Tokyo 100-8405 (JP)
(72) Inventor: FUJII, Naoki, Tokyo 100-8405 (JP); AKATSUKA, Kosho, Tokyo 100-8405 (JP)
(74) Representative: Müller-Boré & Partner Patentanwälte PartG mbB
(86) International application number: PCT/JP2024/043064
(87) International publication number: WO 2025/126948

(57) **Abstract**

The present invention provides a method for producing a sulfide solid electrolyte capable of enhancing solubility of a raw material when producing the sulfide solid electrolyte by a melting method. The present invention relates to a method for producing a sulfide solid electrolyte containing at least one element of Sn, Si and Sb by heating and melting a sulfide solid electrolyte raw material containing at least one element of Sn, Si and Sb in a gas atmosphere containing a sulfur element and cooling and solidifying the obtained melt, wherein the heating and melting increases the valence of the element contained in the sulfide solid electrolyte raw material.

## Description

### TECHNICAL FIELD

The present invention relates to a method for producing a sulfide solid electrolyte and a sulfide solid electrolyte.

### BACKGROUND ART

Lithium ion secondary batteries are widely used in portable electronic devices such as a mobile phone and a notebook computer. In the related art, a liquid electrolyte has been used in the lithium ion secondary batteries. On the other hand, in recent years, an all-solid-state lithium ion secondary battery in which a solid electrolyte is used as an electrolyte of the lithium ion secondary battery has attracted attention from the viewpoint that improvement of safety, high-speed charging and discharging, and a reduction in size of a case can be expected. Examples of the solid electrolyte used in the all-solid-state lithium ion secondary battery include a sulfide solid electrolyte. As the sulfide solid electrolyte, a Li-P-S-based crystallized glass, a Li-P-S-Ha-based crystallized glass, and a Li-P-S-Ha-based argyrodite type crystal are mainly used.

On the other hand, from the viewpoint of preventing generation of H₂S and a decrease in ion conductivity due to exposure to moisture, a new type of sulfide solid electrolyte in which a part or all of PS₄ contained in the sulfide solid electrolyte is substituted with another tetrahedral structure is also known. For example, Non-Patent Literature 1 describes Li_{6.6}[Si_{0.6}Sb_{0.4}]S₅I in which PS₄ is substituted with SbS₄ having another tetrahedral structure, as a sulfide solid electrolyte having an argyrodite type crystal structure. Non-Patent Literature 2 describes Li_{6.5}[P_{0.25}Si_{0.25}Ge_{0.25}Sb_{0.25}]S₅I.

### CITATION LIST

### NON-PATENT LITERATURE

Non-Patent Literature 1: Laidong Zhou et al., "New Family of Argyrodite Thioantimonate Lithium Superionic Conductors", J. Am. Chem. Soc. 2019, 141, 48, 19002-19013
Non-Patent Literature 2: Jing Lin et al., "A High-Entropy Multicationic Substituted Lithium Argyrodite Superionic Solid Electrolyte", ACS Materials Lett. 2022, 4, 2187-2194

### SUMMARY OF INVENTION

### TECHNICAL PROBLEM

As a method for producing such a new type of sulfide solid electrolyte, it is common to perform a pretreatment by a mechanical milling method and then seal the sample in an evacuated tube and subject it to heat treatment for a long period to obtain a sulfide solid electrolyte. However, in order to produce a sulfide solid electrolyte containing at least one element of Sn, Si, and Sb such as SnS₄, SiS₄, or SbS₄ in addition to PS₄ having a tetrahedral structure through the pretreatment by the mechanical milling method, it is necessary to apply a huge amount of energy during the production. Therefore, it has not been realistic to mass-produce the sulfide solid electrolyte by the mechanical milling method.

The present inventors have focused on a melting method rather than the mechanical milling method as the method for producing a sulfide solid electrolyte. However, it has been found that when PS₄ is substituted with another tetrahedral structure such as SnS₄, the meltability of the raw material is deteriorated due to, for example, an increase in the melting point of the raw material. When the meltability of the raw material deteriorates, problems arise, such as difficulty in designing a heating apparatus, such as a heater, suitable for melting, corrosion of furnace materials or a container due to an increase in heating temperature, increased volatilization of constituent components, and an increase in the amount of heat that must be removed during cooling. In addition, when the meltability of the raw material is low, it is difficult to obtain a homogeneous sulfide solid electrolyte, and thus the lithium ion conductivity may also decrease.

An object of the present invention is to provide a method for producing a sulfide solid electrolyte capable of improving the meltability of a raw material when producing a sulfide solid electrolyte containing at least one element of Sn, Si, and Sb by a melting method.

### SOLUTION TO PROBLEM

As a result of intensive studies, the present inventors have found that when producing a sulfide solid electrolyte containing at least one element of Sn, Si, and Sb by a melting method, the meltability of the raw material can be improved by increasing the valence of at least one element of Sn, Si, and Sb contained in a sulfide solid electrolyte raw material by heating and melting, that is, by making the valence of the above element contained in the sulfide solid electrolyte to be produced larger than the valence of the above element contained in the sulfide solid electrolyte raw material.

The present inventors have also found that when producing a sulfide solid electrolyte by a melting method, the meltability of the raw material can be improved by adding a Ha compound to a sulfide solid electrolyte raw material in an amount in excess of a target composition of a sulfide solid electrolyte to be produced, heating and melting the raw material, and volatilizing at least a part of the excess Ha compound relative to the target composition as Ha₂ or HHa.

The present inventors have also found that when producing a sulfide solid electrolyte containing at least one element of Sn, Si, and Sb by a melting method, the meltability of the raw material can be improved by adding a Ha compound to a sulfide solid electrolyte raw material in an amount in excess of a target composition of a sulfide solid electrolyte to be produced, heating and melting the raw material, volatilizing at least a part of the excess Ha compound relative to the target composition as Ha₂ or HHa, and increasing the valence of at least one element of Sn, Si, and Sb contained in the sulfide solid electrolyte raw material by heating and melting, that is, by making the valence of the above element contained in the sulfide solid electrolyte to be produced larger than the valence of the above element contained in the sulfide solid electrolyte raw material.

That is, the first embodiment of the present invention relates to a method for producing a sulfide solid electrolyte, the method including: heating and melting a sulfide solid electrolyte raw material containing at least one element of Sn, Si, and Sb in a sulfur element-containing gas atmosphere; and cooling and solidifying an obtained melt to produce a sulfide solid electrolyte containing at least one element of Sn, Si, and Sb, in which by the heating and melting, a valence of the element contained in the sulfide solid electrolyte raw material is increased.

The second embodiment of the present invention relates to a method for producing a sulfide solid electrolyte, the method including: adding a Ha compound to a sulfide solid electrolyte raw material in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and cooling and solidifying an obtained melt. Here, Ha in the Ha compound, Ha₂, and HHa represents at least one element selected from halogen elements.

The third embodiment of the present invention relates to a method for producing a sulfide solid electrolyte, the method including: adding a Ha compound to a sulfide solid electrolyte raw material containing at least one element of Sn, Si, and Sb in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and cooling and solidifying an obtained melt to produce a sulfide solid electrolyte containing at least one element of Sn, Si, and Sb, in which by the heating and melting, a valence of the element contained in the sulfide solid electrolyte raw material is increased. Here, Ha in the Ha compound, Ha₂, and HHa represents at least one element selected from halogen elements.

### ADVANTAGEOUS EFFECTS OF INVENTION

According to each embodiment of the present invention, when producing a sulfide solid electrolyte by the melting method, the meltability of the raw material can be improved. Accordingly, since it is not necessary to excessively increase the heating temperature, it does not become difficult to design a heating apparatus, such as a heater, suitable for melting, and problems such as corrosion of furnace materials or a container due to an increase in heating temperature, increased volatilization of constituent components, and an increase in the amount of heat that must be removed during cooling can also be avoided. In addition, since the meltability of the raw material is high, a homogeneous sulfide solid electrolyte is easily obtained, and thus the lithium ion conductivity can also be improved.

### BRIEF DESCRIPTION OF DRAWINGS

FIG. 1 is a flow diagram showing a method for producing a sulfide solid electrolyte according to a first embodiment of the present invention.
FIG. 2 is a flow diagram showing a method for producing a sulfide solid electrolyte according to a second embodiment of the present invention.
FIG. 3 is a flow diagram showing a method for producing a sulfide solid electrolyte according to a third embodiment of the present invention.

### DESCRIPTION OF EMBODIMENTS

Hereinafter, the present invention is described in detail, but the present invention is not limited to the following embodiments and can be freely modified and implemented without departing from the gist of the present invention.

"To" indicating a numerical range is used to include numerical values written before and after it as a lower limit value and an upper limit value.

### <<First Embodiment: Method for Producing Sulfide Solid Electrolyte>>

A method for producing a sulfide solid electrolyte according to a first embodiment includes: heating and melting a sulfide solid electrolyte raw material containing at least one element of Sn, Si, and Sb in a sulfur element-containing gas atmosphere; and cooling and solidifying the obtained melt to produce a sulfide solid electrolyte containing at least one element of Sn, Si, and Sb, in which by the heating and melting, the valence of the element contained in the sulfide solid electrolyte raw material is increased.

Studies by the present inventors have revealed that when producing a sulfide solid electrolyte in which at least a part of PS₄ having a tetrahedral structure is substituted with other tetrahedral structures such as SnS₄, SiS₄, and SbS₄, that is, a sulfide solid electrolyte containing at least one element of Sn, Si, and Sb, the meltability of a raw material is deteriorated due to, for example, an increase in melting point of the raw material. In contrast, the present inventors have found that the meltability of the raw material can be improved by selecting the sulfide solid electrolyte raw material such that the valence of at least one element of Sn, Si, and Sb contained in the sulfide solid electrolyte raw material is increased by heating and melting, that is, by producing the sulfide solid electrolyte such that the valence of at least one element of Sn, Si, and Sb contained in the sulfide solid electrolyte to be finally produced in the present embodiment is larger than the valence of the above element contained in the sulfide solid electrolyte raw material. Such a mechanism of action is not clear, but is presumed as follows.

That is, in order to select the sulfide solid electrolyte raw material such that the valence of at least one element of Sn, Si, and Sb contained in the sulfide solid electrolyte raw material is increased by heating and melting, that is, in order to make the valence of the above element contained in the sulfide solid electrolyte to be finally produced in the present embodiment larger than the valence of the above element contained in the sulfide solid electrolyte raw material, a substance having a small valence of the above element is used as the sulfide solid electrolyte raw material. For example, when the above element is Sn, elemental Sn, SnS, or the like, in which Sn has a smaller valence than in SnS₂ or the like, are used as the sulfide solid electrolyte raw material. Since the valence of the above element in the above raw material is small, the above raw material can take sulfur from the surroundings in the initial melting reaction, particularly sulfur in Li₂S, which is a main component and has a high melting point. As a result, it is presumed that the initial meltability of the raw material is improved due to, for example, a decrease in the melting point of the raw material. It is also presumed that the one reason why the initial meltability of the raw material is improved is that melting can be performed while avoiding precipitation of Li₄SnS₄ and Li₄SiS₄ crystals having a high melting point. The present embodiment is not construed as being limited to the above mechanism of action.

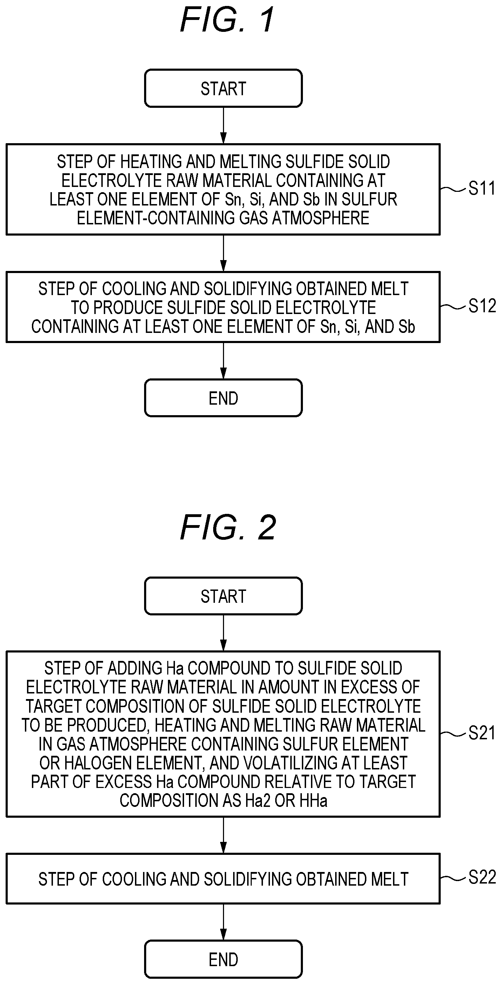

As shown in FIG. 1, the method for producing a sulfide solid electrolyte according to the first embodiment includes the following steps.

(Step S11) Step of heating and melting a sulfide solid electrolyte raw material containing at least one element of Sn, Si, and Sb in a sulfur element-containing gas atmosphere

(Step S12) Step of cooling and solidifying the obtained melt to produce a sulfide solid electrolyte containing at least one element of Sn, Si, and Sb

Hereinafter, each step is described.
<Step S11: Step of Heating and Melting Sulfide Solid Electrolyte Raw Material Containing at Least One Element of Sn, Si, and Sb in Sulfur Element-containing Gas Atmosphere>
· Sulfide solid electrolyte raw material containing at least one element of Sn, Si, and Sb

In the method for producing a sulfide solid electrolyte according to the first embodiment, a sulfide solid electrolyte raw material containing at least one element of Sn, Si, and Sb (hereinafter, also collectively referred to as the present raw material) is used as a raw material. In other words, as the raw material, at least one sulfide solid electrolyte raw material of a sulfide solid electrolyte raw material containing Sn, a sulfide solid electrolyte raw material containing Si, and a sulfide solid electrolyte raw material containing Sb is used.

Among the present raw materials, examples of the sulfide solid electrolyte raw material containing Sn (hereinafter, also referred to as a Sn-containing raw material) include Sn (elemental Sn) and SnS. A multicomponent compound such as R-M-Sn-S (R is a monovalent cation and M is a divalent or higher cation) may be used. Among these, Sn and SnS are preferred, and Sn is most preferred, from the viewpoint of having a valence lower than that of Sn contained in the sulfide solid electrolyte to be finally produced in the present embodiment and being capable of improving the meltability of the raw material.

The valence of Sn contained in the sulfide solid electrolyte to be finally produced is tetravalent since it is electrochemically stable, and the Sn-containing raw material is zero valent in the case of Sn and divalent in the case of SnS.

The molar equivalent of Sn in the Sn-containing raw material is preferably 0.2 to 1 molar equivalents, more preferably 0.5 to 1 molar equivalents, and still more preferably 0.7 to 1 molar equivalents.

Among the present raw materials, examples of the sulfide solid electrolyte raw material containing Sb (hereinafter, also referred to as a Sb-containing raw material) include Sb (elemental Sb) and Sb₂S₃. A multicomponent compound such as R-M-Sb-S (R is a monovalent cation and M is a divalent or higher cation) may be used. Among these, Sb and Sb₂S₃ are preferred, and Sb is most preferred, from the viewpoint of having a valence lower than that of Sb contained in the sulfide solid electrolyte to be finally produced in the present embodiment and being capable of improving the meltability of the raw material.

The valence of Sb contained in the sulfide solid electrolyte to be finally produced is pentavalent since it is electrochemically stable, and the Sb-containing raw material is zero valent in the case of Sb and trivalent in the case of Sb₂S₃.

The molar equivalent of Sb in the Sb-containing raw material is preferably 0.1 to 1 molar equivalents, more preferably 0.2 to 1 molar equivalents, and still more preferably 0.3 to 1 molar equivalents.

Among the present raw materials, examples of the sulfide solid electrolyte raw material containing Si (hereinafter, also referred to as a Si-containing raw material) include Si (elemental Si). A multicomponent compound such as R-M-Si-S (R is a monovalent cation and M is a divalent or higher cation) may be used. Among these, Si is preferred, and Si is most preferred, from the viewpoint of having a valence lower than that of Si contained in the sulfide solid electrolyte to be finally produced in the present embodiment and being capable of improving the meltability of the raw material.

The valence of Si contained in the sulfide solid electrolyte to be finally produced is tetravalent since it is electrochemically stable, and the Si-containing raw material is zero valent in the case of Si.

The molar equivalent of Si in the Si-containing raw material is preferably 0.2 to 1 molar equivalents, more preferably 0.5 to 1 molar equivalents, and still more preferably 0.7 to 1 molar equivalents.

From the viewpoint of the ion conductivity, the constituent component of the sulfide solid electrolyte preferably contains at least one element of Sn, Si, and Sb, and more preferably contains Sb.

The present raw materials generally include a sulfide solid electrolyte raw material containing substances such as an alkali metal element (R) and a sulfur element (S) as elements other than the above Sn, Si, and Sb. Examples of the alkali metal element (R) include substances such as a lithium element (Li), a sodium element (Na), and a potassium element (K). In the case of applying the obtained sulfide solid electrolyte to a lithium ion secondary battery, the present raw materials preferably include a sulfide solid electrolyte raw material containing a substance such as a lithium element (Li) as the alkali metal element (R).

As an alkali metal element (R) source, substances containing an alkali metal element such as an elemental alkali metal element and a compound containing an alkali metal element can be appropriately combined and used. In the case where the alkali metal element (R) is a lithium element (Li), a Li-containing substance such as elemental Li or a Li-containing compound can be appropriately used in combination as the lithium element.

Examples of the lithium element (Li)-containing substance, that is, a sulfide solid electrolyte raw material containing the lithium element (Li), include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metal lithium. The lithium element (Li)-containing substance may be used alone or in combination of two or more kinds thereof.

As the lithium element (Li)-containing substance, it is preferable to use lithium sulfide from the viewpoint of obtaining a sulfide material. In the case where the obtained sulfide solid electrolyte contains a halogen element, a lithium halide (LiHa, where Ha is a halogen element) is also preferred as the lithium element (Li)-containing substance. The lithium halide is to be described later.

As a sulfur element (S) source, S-containing substances such as elemental S and a S-containing compound can be appropriately combined and used. The sulfur element (S)-containing substance, that is, a sulfide solid electrolyte raw material containing the sulfur element (S) may be used alone or in combination of two or more kinds thereof. Li₂S is a compound serving as both the sulfur element (S)-containing substance and the lithium element (Li)-containing substance described above. P₂S₅ is a compound serving as both the sulfur element (S)-containing substance and a phosphorus element (P)-containing substance to be described later.

SnS is a compound serving as both the sulfur element (S)-containing substance and the Sn-containing substance described above. Sb₂S₃ is a compound serving as both the sulfur element (S)-containing substance and the Sb-containing substance described above.

Examples of the sulfur element (S)-containing substance include phosphorus sulfides such as phosphorus pentasulfide (P₂S₅) and phosphorus trisulfide (P₂S₃), other sulfur compounds containing phosphorus, elemental sulfur, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS).

The present raw materials preferably further include the phosphorus element (P)-containing substance, that is, a sulfide solid electrolyte raw material containing the phosphorus element (P), from the viewpoint of improving the ion conductivity of the obtained sulfide solid electrolyte. As a phosphorus element (P) source, P-containing substances such as elemental P and a P-containing compound can be appropriately combined and used. The phosphorus element (P)-containing substance may be used alone or in combination of two or more kinds thereof.

Examples of the phosphorus element (P)-containing substance include phosphorus sulfides such as phosphorus trisulfide (P₂S₃), phosphorus compounds such as sodium phosphate (Na₃PO₄), and elemental phosphorus, in addition to phosphorus pentasulfide (P₂S₅) described above.

In the case where the present raw materials are mixed and charged into a heating furnace and then heated and melted, for example, a mixing ratio of the present raw materials may be appropriately determined according to a composition of the target sulfide solid electrolyte. In the case where the present raw materials are charged into a heating furnace and then mixed and heated and melted, for example, a charging ratio of the present raw materials may be appropriately determined according to the composition of the target sulfide solid electrolyte.

The mixing ratio or the charging ratio of the present raw materials is not particularly limited. For example, the molar ratio S/R of the sulfur element (S) to the alkali metal element (R) in the present raw materials is preferably 0.65/0.35 or less, and more preferably 0.5/0.5 or less, from the viewpoint of improving the ion conductivity and the like of the obtained sulfide solid electrolyte.

In the case of charging the present raw materials into the heating furnace, the present raw materials are preferably mixed at a predetermined stoichiometric ratio. The mixing method for mixing the present raw materials is not particularly limited, and examples thereof include mixing in a mortar, mixing using a medium such as a planetary ball mill, and medium-less mixing such as a pin mill, a powder stirrer, and air flow mixing.

On the other hand, since lithium sulfide is expensive, a lithium compound other than lithium sulfide, metal lithium, or the like may be used in addition to lithium sulfide, from the viewpoint of reducing production costs of the sulfide solid electrolyte.

In this case, as the present raw materials, specific examples of the Li-containing substance, that is, a sulfide solid electrolyte raw material containing the lithium element (Li) include metal lithium, a lithium halide (LiHa), lithium carbonate (Li₂CO₃), lithium sulfate (Li₂SO₄), lithium oxide (Li₂O), and lithium hydroxide (LiOH). These may be used alone or in combination of two or more kinds thereof.

The present raw materials may include a sulfide solid electrolyte raw material containing further substances (compounds or the like) in addition to the above substances depending on the composition of the target sulfide solid electrolyte or as additives or the like. For example, in the case of producing a sulfide solid electrolyte containing a halogen element (Ha) such as F, Cl, Br, or I, the present raw materials preferably include a sulfide solid electrolyte raw material containing the halogen element.

Examples of a halogen element-containing compound, that is, a sulfide solid electrolyte raw material containing the halogen element, include lithium halides such as lithium fluoride (LiF), lithium chloride (LiCl), lithium bromide (LiBr), and lithium iodide (LiI), a phosphorus halide, a phosphoryl halide, a sulfur halide, a sodium halide, and a boron halide. Among these, from the viewpoint of reactivity, a lithium halide is preferred, LiCl, LiBr, and LiI are more preferred, and LiCl and LiBr are still more preferred. These compounds may be used alone or in combination of two or more kinds thereof.

An alkali metal halide such as a lithium halide is also a compound containing an alkali metal element such as Li, and thus can be the alkali metal element (R) source in the present raw materials.

As to be described later, the sulfide solid electrolyte obtained by the production method according to the present embodiment may be amorphous depending on the purpose. In the case where the obtained sulfide solid electrolyte has an amorphous phase, it is preferable to contain a sulfide solid electrolyte raw material containing a sulfide such as B₂S₃, GeS₂, or Al₂S₃ as the present raw materials from the viewpoint of easily forming an amorphous phase and reducing a facility load even when a rapid cooling rate during rapid cooling decreases. These may be used alone or in combination of two or more kinds thereof.

From the viewpoint of imparting moisture resistance to the obtained sulfide solid electrolyte, it is preferable to contain an oxide such as SiO₂, B₂O₃, GeO₂, Al₂O₃, or P₂O₅ as the constituent components of the sulfide solid electrolyte. These may be used alone or in combination of two or more kinds thereof.

In the case of heating the present raw materials, the sulfide and the oxide may be contained together in the raw materials, or may be separately added during heating.

The addition amount of the sulfide and the oxide is preferably 0.1 mass% to 50 mass%, and more preferably 0.5 mass% to 40 mass%, with respect to a total of the present raw materials. Here, the addition amount is preferably 0.1 mass% or more, more preferably 0.5 mass% or more, and is preferably 50 mass% or less, more preferably 40 mass% or less.

The present raw materials may further contain a compound to be a crystal nucleus to be described later.

### · Heating and Melting

In the step S11 in the present embodiment, the present raw materials are charged into, for example, a heating furnace and heated and melted.

As the furnace in the heating furnace for use in the heating and melting, a well-known furnace including a heating unit can be appropriately used, and a material and a size of the furnace can be freely selected.

The temperature in the heating and melting is not particularly limited as long as the present raw materials are melted, and is preferably 600°C or higher, more preferably 600°C to 1,000°C, still more preferably 630°C to 950°C, even more preferably 650°C or higher and lower than 900°C, and particularly preferably 650°C or higher and lower than 850°C. Here, the temperature in the heating and melting is preferably 600°C or higher, more preferably 630°C or higher, and still more preferably 650°C or higher, from the viewpoint of homogenizing the melt in a short period of time. The temperature in the heating and melting is preferably 1,000°C or lower, more preferably 950°C or lower, still more preferably lower than 900°C, and particularly preferably lower than 850°C, from the viewpoint of preventing deterioration or decomposition of components in the melt.

The temperature in the heating and melting is the temperature of the melt generated in the furnace, and can be adjusted by the heating unit provided in the furnace.

The time for the heating and melting is not particularly limited as long as the present raw materials are melted, and may be, for example, 0.5 hours or longer, 1 hour or longer, or 2 hours or longer.

The pressure during the heating and melting is not particularly limited as long as the present raw materials are melted, and for example, ambient pressure or slight pressurization is preferred, and ambient pressure is more preferred.

From the viewpoint of preventing side reactions between the melt and a water vapor, oxygen, or the like during the heating and melting, the dew point in the furnace is preferably - 20°C or lower. The lower limit is not particularly limited, and is generally -80°C or higher. The oxygen concentration in the furnace is preferably 1,000 ppm by volume or less.

In the present embodiment, the heating and melting is performed in a sulfur element-containing gas atmosphere. By heating and melting the present raw materials in the sulfur element-containing gas atmosphere, sulfur is introduced into the obtained melt, making it possible to prevent a change in sulfur composition due to volatilization. In addition, the sulfur element-containing gas atmosphere also serves as a supply source of sulfur to the raw materials, and can promote the melting and enable the target composition to be achieved. Examples of the sulfur element-containing gas include a gas containing a compound containing the sulfur element or elemental sulfur, such as a sulfur gas, a hydrogen sulfide gas, and a carbon disulfide gas.

The sulfur element-containing gas atmosphere may be obtained by supplying a sulfur source into the melt obtained by heating and melting the present raw materials and heating the sulfur source to generate a sulfur element-containing gas. In this case, the sulfur source is not particularly limited as long as it is elemental sulfur or a sulfur compound from which the sulfur element-containing gas can be obtained by heating, and examples thereof include elemental sulfur, hydrogen sulfide, organic sulfur compounds such as carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and a rubber subjected to a sulfur vulcanization treatment. The sulfur source is preferably a sulfur powder.

As another method, the sulfur element-containing gas atmosphere may be obtained by introducing a sulfur vapor obtained in advance into the furnace. For example, sulfur is heated at 200°C to 450°C to generate a sulfur vapor, and an inert gas such as a N₂ gas, an argon gas, or a helium gas is used as a carrier gas to transport the sulfur vapor into the furnace to obtain the sulfur element-containing gas atmosphere.

As still another method, the sulfur element-containing gas atmosphere may be obtained by incorporating the sulfur source into the present raw materials. Accordingly, when heating and melting the present raw materials, the sulfur source is also heated, so that the present raw materials can be heated and melted in the generated sulfur element-containing gas atmosphere.

In the present embodiment, for obtaining the above sulfur element-containing gas atmosphere, any one of the methods may be used, or a plurality of methods may be used in combination.

The heating and melting in the present embodiment may be performed on an intermediate after the intermediate is synthesized by heat-treating the present raw materials.

In the heat treatment in the intermediate synthesis step, the temperature at which the present raw materials are heated is preferably 250°C or higher, more preferably 255°C or higher, and still more preferably 260°C or higher. The temperature is preferably equal to or higher than the above lower limit value since the reaction for synthesizing the intermediate can proceed easily. The temperature is preferably 500°C or lower, more preferably 450°C or lower, and still more preferably 400°C or lower. The temperature is preferably equal to or lower than the above upper limit value since volatilization of a component having a low boiling point such as P₂S₅ in the raw materials is prevented, and the reaction for synthesizing an intermediate containing a compound having a target composition can proceed easily.

In order to obtain the intermediate by the heat treatment, it is preferable to hold the temperature within a preferred range for a certain period of time. It is more preferable that the temperature range for holding be within a certain temperature range. For example, the temperature is preferably within ±15°C of the reference temperature, and more preferably within ±10°C of the reference temperature.

The holding time is preferably 1 minute or longer, more preferably 5 minutes or longer, still more preferably 10 minutes or longer, even more preferably 15 minutes or longer, and particularly preferably 20 minutes or longer. Even when heated at the above preferred temperature, if the holding time is not sufficient, the progress of the reaction tends to be insufficient. The holding time is preferably 1 minute or longer since this provides conditions under which the reaction proceeds and an intermediate can be obtained. The holding time is preferably 600 minutes or shorter, and more preferably 500 minutes or shorter, from the viewpoint of preventing the volatilization of the component having a low boiling point such as P₂S₅ in the present raw materials.

The holding time may be further shortened in some cases, such as a case where the present raw materials are subjected to a predetermined treatment. Examples of such a treatment include, for example, increasing the reactivity between the particles contained in the present raw material by reducing the particle size of the present raw material, by removing or modifying as much as possible an oxide layer on the surfaces of the particles contained in the present raw material by etching or the like, by making the particles porous, and by adjusting the mixing conditions of the present raw material to improve the homogeneity of the present raw material. In this case, the holding time is preferably 1 second or longer, more preferably 10 seconds or longer, and still more preferably 20 seconds or longer. The holding time is preferably 10 minutes or shorter, and more preferably 5 minutes or shorter, from the viewpoint of preventing the volatilization of the component having a low boiling point such as P₂S₅ in the present raw materials.

From the viewpoint of shortening the holding time, that is, from the viewpoint of shortening the reaction time in the intermediate synthesis step, the particle diameter of the present raw materials is preferably reduced. When the particle diameter (D50) of the present raw materials is too large, it may affect the homogeneity of the sulfide solid electrolyte, and the particle diameter (D50) is preferably small to some extent from such a viewpoint. From these viewpoints, specifically, the particle diameter (D50) of the present raw materials is preferably 1 mm or less, more preferably 500 µm or less, still more preferably 250 µm or less, even more preferably 100 µm or less, and particularly preferably 50 µm or less.

The smaller the particle diameter, the more preferred, and the practical lower limit is about 0.1 µm, 1 µm or more is preferred, and 5 µm or more is more preferred. The particle diameter of the raw materials is preferably 10 µm or more, more preferably 100 µm or more, and still more preferably 250 µm or more, for example, from the viewpoint of reducing production costs.

The present raw materials may be a mixture of a plurality of substances (compounds or the like) as described above. The present raw materials may be in the form of a mixture of a plurality of substances having different particle diameters. In this case, it is preferable that the particle diameter of each substance be within the above range.

In the present description, the particle diameter (D50) of the raw materials refers to a median diameter (D50) determined from a chart of a volume-based particle diameter distribution obtained by measuring a particle diameter distribution using a laser diffraction particle diameter distribution analyzer MT3300EXII manufactured by Microtrac.

The pressure during the heat treatment in the intermediate synthesis step is not particularly limited, and for example, ambient pressure to slight pressurization is preferred, and ambient pressure is more preferred.

The heat treatment in the intermediate synthesis step is preferably performed in an inert gas atmosphere in order to prevent a side reaction between the present raw materials and a water vapor, oxygen, or the like. Specific examples thereof include a N₂ gas, an argon gas, and a helium gas. The dew point during the heat treatment is preferably -20°C or lower, and the lower limit thereof is not particularly limited, and is generally about -80°C. The oxygen concentration is preferably 1,000 ppm or less.

In the intermediate synthesis step, intermediates having different compositions according to the purpose can be obtained by adjusting the compound contained in the present raw materials and the mixing ratio thereof and controlling the conditions during the heat treatment. The obtained intermediate may be directly used in a heating and melting step in the heating furnace used for the synthesis of the intermediate without being taken out from the heat-resistant container, or may be cooled to room temperature, then taken out, and temporarily stored. A plurality of kinds of intermediates having different compositions that have been taken out and stored can be combined and used in the heating and melting step.

Examples of the composition of the intermediate include a compound containing Li, P, and S, such as Li₄P₂S₆ or Li₃PS₄, and a compound in which one or more of Sb, Sn, and Si are substituted at the phosphorus site of the above compound. In the heating and melting step, the amount of sulfur introduced into the intermediate can also be controlled in a sulfur element-containing gas atmosphere, and in this case, the intermediate preferably includes at least one of Li₄P₂S₆, Li₃PS₄, and a compound in which one or more of Sb, Sn, and Si are substituted at the phosphorus site of the above compound. Li₄P₂S₆, Li₃PS₄, and the compound in which one or more of Sb, Sn, and Si are substituted at the phosphorus site of the above compound are thermodynamically stable, and thus are preferred from the viewpoint of stability during temporary storage of the intermediate.

Here, the reaction in the intermediate synthesis step depends on the composition of the target sulfide solid electrolyte, and is typically a reaction in which Li₂S and P₂S₅ contained in the raw materials start to react at about 250°C, and at least one of Li₄P₂S₆, Li₃PS₄ and the compound in which one or more of Sb, Sn, and Si are substituted at the phosphorus site of the above compound is formed. In this reaction, the starting materials for Li₂S and P₂S₅ may be a Li-containing substance (such as a compound) and a P-containing substance (such as a compound), respectively, at stages prior to obtaining Li₂S and P₂S₅.

In order to essentially accelerate this reaction, it is preferable to increase the reactivity between the particles contained in the present raw material by reducing the particle size of the present raw material, by removing or modifying as much as possible an oxide layer on the surfaces of the particles contained in the present raw material by etching or the like, by making the particles porous, and by adjusting the mixing conditions of the present raw material to improve the homogeneity of the present raw material. In particular, in this reaction, the particle size of Li₂S, with which P₂S₅ reacts first, can easily influence the intermediate formation reaction. Therefore, from the viewpoint of promoting the intermediate formation reaction, it is preferable that the particle size of Li₂S or a Li-containing substance (such as a compound) at a stage prior to obtaining Li₂S in the raw materials be reduced. It is considered that lowering the crystallinity of the Li₂S surface and performing a treatment for increasing the surface area other than particle size reduction are also effective from the above viewpoint. It is considered that the reaction between Li₂S and P₂S₅ in a sulfur element-containing gas atmosphere also contributes to promoting the intermediate formation reaction.

In the case of producing the sulfide solid electrolyte containing a halogen element, the intermediate preferably contains a halogen element-containing compound. In the case where the present raw materials include a sulfide solid electrolyte raw material containing a lithium halide such as LiCl, LiBr, or LiI, the composition of these compounds hardly changes in the temperature range during the heat treatment, and thus the obtained intermediate may also contain a lithium halide.

By going through the intermediate synthesis step, the volatilization of the sulfur component and the phosphorus component in the present raw materials can be prevented as compared with the case of directly obtaining the target sulfide solid electrolyte from the present raw materials, so that a compound including Li, P, and S and having clear composition information, such as Li₄P₂S₆, Li₃PS₄, and a compound in which one or more of Sb, Sn, and Si are substituted at the phosphorus site of the above compound, can be synthesized as the intermediate. The intermediate is thermodynamically stable, and thus can be taken out after the temperature is lowered to room temperature after the heat treatment during the synthesis of the intermediate. Since composition analysis can be performed on the intermediate taken out in this manner, the amount of sulfur to be introduced required in the heating and melting step can be determined. By going through the intermediate having a specific composition from the present raw materials, more appropriate conditions for heating and melting can be easily set in accordance with the composition of the intermediate. Accordingly, since the amount of sulfur to be introduced can be appropriately controlled in the sulfur element-containing gas atmosphere, a composition deviation is less likely to occur. Further, the composition of the obtained sulfide solid electrolyte can be homogenized by heating and melting through the intermediate having a composition closer to the target sulfide solid electrolyte than the present raw materials. In addition, when a plurality of kinds of intermediates having different compositions are combined and heated and melted, sulfide solid electrolytes having different compositions, physical properties, and performances can be easily separately prepared.

In addition, the raw materials of Sn, Si, and Sb and the lithium halide may be mixed in necessary amounts after the intermediate synthesis, and the process may proceed to the subsequent melting step.

<Step S12: Step of Cooling and Solidifying Obtained Melt to Produce Sulfide Solid Electrolyte Containing at Least One Element of Sn, Si, and Sb>

The production method according to the present embodiment includes a step of cooling and solidifying the melt obtained in the step S11 to produce a sulfide solid electrolyte containing at least one element of Sn, Si, and Sb. By cooling the melt, a solid sulfide solid electrolyte can be obtained.

### · Cooling and Solidification

In the step S12, for example, the melt obtained in the step S11 is discharged through a discharge port provided in the furnace at any timing, and the production method proceeds to a step of cooling and solidifying the melt. The cooling of the melt can be performed by a known method and is not particularly limited. For example, from the viewpoint of increasing a cooling rate, cooling using a twin roller, which is generally said to have the highest rapid cooling rate, is preferred.

The cooling rate is preferably 0.01°C/sec or more, more preferably 0.05°C/sec or more, and still more preferably 0.1°C/sec or more, from the viewpoint of maintaining the composition of the melt obtained in the step S11. The upper limit value of the cooling rate is not particularly limited, and the cooling rate of the twin roller is, for example, 1,000,000°C/sec or less.

When it is desired to obtain an amorphous sulfide solid electrolyte, it is preferable to perform rapid cooling at a higher cooling rate. The cooling rate during the rapid cooling is preferably 10°C/sec or more, more preferably 100°C/sec or more, still more preferably 500°C/sec or more, and particularly preferably 700°C/sec or more. The upper limit value of the cooling rate during the rapid cooling is not particularly limited, and the cooling rate of the twin roller is, for example, 1,000,000°C/sec or less.

On the other hand, a sulfide solid electrolyte having a crystal phase may be obtained by slow cooling in the cooling and solidification step. The sulfide solid electrolyte may have a crystal phase and an amorphous phase.

The cooling rate in the case of the slow cooling is preferably 0.01°C/sec to 500°C/sec, and more preferably 0.05°C/sec to 450°C/sec. The cooling rate may be 0.01°C/sec to 10°C/sec or 0.05°C/sec to 5°C/sec.

Here, the cooling rate is preferably 0.01°C/sec or more, more preferably 0.05°C/sec or more, and is preferably 500°C/sec or less, more preferably 450°C/sec or less. The cooling rate may be 10°C/sec or less or 5°C/sec or less. The cooling rate may be appropriately adjusted according to crystallization conditions.

When it is desired to obtain the sulfide solid electrolyte having a crystal phase, it is preferable to contain a compound to be a crystal nucleus in the melt obtained in the step S11 in order to facilitate precipitation of crystals.

The method of incorporating the compound to be a crystal nucleus into the melt is not particularly limited, and examples thereof include a method of adding the compound to be a crystal nucleus to the present raw materials, and a method of directly adding the compound to be a crystal nucleus to the melt during the heating and melting.

Examples of the compound to be a crystal nucleus include oxides, oxynitrides, nitrides, carbides, other chalcogen compounds, and halides. The compound to be a crystal nucleus is preferably a compound having a certain degree of compatibility with the melt. A compound completely incompatible with the melt cannot serve as a crystal nucleus.

The addition amount of the compound to be a crystal nucleus with respect to the melt is preferably 0.01 mass% to 20 mass%, more preferably 0.1 mass% to 20 mass%, and still more preferably 1 mass% to 10 mass%. Here, the addition amount is preferably 0.01 mass% or more, more preferably 0.1 mass% or more, and still more preferably 1 mass% or more, from the viewpoint of suitably forming a crystal phase in the obtained sulfide solid electrolyte. The addition amount is preferably 20 mass% or less, and more preferably 10 mass% or less, from the viewpoint of preventing a decrease in lithium ion conductivity.

When it is desired to obtain a sulfide solid electrolyte having a large amount of an amorphous phase, the compound to be a crystal nucleus is not added to the melt, or even when the compound is added, the addition amount is preferably 1 mass% or less, and more preferably 0.1 mass% or less. The addition amount may be 0.01 mass% or less.

The cooling and solidification is preferably performed under ambient pressure. The ambient pressure means that the pressure is not controlled during the cooling. Specifically, the pressure is about 0.8 atm to 1.2 atm.

In the production method according to the present embodiment, the sulfide solid electrolyte obtained in the step S12 may be heated again for a heat treatment. In the case where the sulfide solid electrolyte is amorphous or contains an amorphous phase, the heat treatment may be particularly performed.

The lithium ion conductivity may be increased by rearranging ions in the crystal structure by the heat treatment.

The heat treatment refers to at least one of a heat treatment for crystallizing the obtained solid and a heat treatment for rearranging the ions in the crystal structure. That is, the heat treatment also includes a crystallization treatment by heating the amorphous sulfide solid electrolyte or the sulfide solid electrolyte containing an amorphous phase.

In the production method according to the present embodiment, the step S11 and the step S12 are preferably performed as a continuous process. That is, it is preferable to continuously obtain the sulfide solid electrolyte by heating and melting the present raw materials, continuously discharging the obtained melt, and transferring the melt to a cooling and solidification step. In this manner, it is preferable to continuously produce the sulfide solid electrolyte.

By continuously producing the sulfide solid electrolyte, a series of steps of heating and melting the present raw materials and discharging and cooling and solidifying the melt are continuously performed, and the sulfide solid electrolyte can be produced more efficiently in a shorter time and in larger quantities.

In a more preferred embodiment of the continuous process, in the step S11, first, the present raw materials are heated and melted in an amount that allows the melt obtained by heating and melting the present raw materials to form at least a melt surface in the furnace. Here, the melt surface means a liquid surface formed by the melt covering the entire bottom surface of the furnace. Once the melt surface is formed in the furnace, the present raw materials to be additionally charged into the melt undergo a rapid increase in temperature and is instantaneously melted. Therefore, as the present raw material is additionally supplied, the melt is continuously generated one after another, and the melt is continuously discharged and subjected to the cooling and solidification step, whereby the sulfide solid electrolyte is continuously obtained in a short time.

By continuous production of the sulfide solid electrolyte, large quantities of sulfide solid electrolytes can be produced in a short time. As the production process is shortened, volatilization of the raw materials during the production process can also be suppressed.

In the production method according to the present embodiment, the processes in the step S11 and the step S12 may be performed in a batch manner. The batch manner is a method in which the present raw materials are charged into a furnace, and then heated and melted to discharge the whole amount, and means a method in which all contents in the furnace are replaced every time the production method according to the present embodiment is performed.

### · Sulfide Solid Electrolyte

The sulfide solid electrolyte obtained by the production method according to the present embodiment contains at least one element of Sn, Si, and Sb. Examples thereof include Li-P-M-S-based or Li-P-M-S-Ha-based sulfide solid electrolytes having an argyrodite type crystal structure (M is at least one element of B, Al, Si, Ga, Ge, In, Sn, Pb, Bi, and other transition metals), sulfide solid electrolytes having a LGPS type crystal structure, and Li-P-S-Ha-based or Li-P-Sn-S(-Ha)-based crystallized glass.

In the production method according to the present embodiment, as described above, it is important that, by the heating and melting, the valence of at least one element of Sn, Si, and Sb contained in the sulfide solid electrolyte raw material is increased, that is, the valence of at least one element of Sn, Si, and Sb contained in the sulfide solid electrolyte to be obtained is larger than the valence of the element contained in the sulfide solid electrolyte raw material. Accordingly, the meltability of the raw material can be improved.

The valences of Sn, Si, and Sb contained in the obtained sulfide solid electrolyte can be clarified by performing structural analysis of the XRD pattern of the obtained crystals and examining the coordination number and the coordination distance of the element. In the case of examining the valences of the elements in more detail, examples of methods include, for the valence of Sn, a Mössbauer method, XPS, and the like, for the valence of Si, 29Si-NMR, XPS, XAFS, and the like, and for the valence of Sb, XAFS, XPS, and the like.

Among the constituent components of the sulfide solid electrolyte obtained by the production method according to the present embodiment, the total molar equivalent of the elements of Sn, Si, and Sb is preferably 0.001 to 0.3 molar equivalents, more preferably 0.01 to 0.2 molar equivalents, and still more preferably 0.02 to 0.1 molar equivalents.

In the case where the sulfide solid electrolyte obtained by the production method according to the present embodiment contains the halogen element (Ha) and the phosphorus element (P), the molar equivalent of the halogen element (Ha) with respect to the phosphorus element (P) among the constituent components of the sulfide solid electrolyte is preferably 0.2 to 4 molar equivalents, and more preferably 0.5 to 3 molar equivalents.

In the case where the sulfide solid electrolyte obtained by the production method according to the present embodiment contains the halogen element (Ha) and the sulfur element (S), the molar equivalent of the halogen element (Ha) with respect to the sulfur element (S) among the constituent components of the sulfide solid electrolyte is preferably 0.01 to 1.0 molar equivalents, and more preferably 0.05 to 0.5 molar equivalents.

Here, the molar equivalent of the halogen element is preferably 0.01 molar equivalents or more, and more preferably 0.05 molar equivalents or more, from the viewpoint of improving the ion conductivity and the like of the obtained sulfide solid electrolyte. The molar equivalent of the halogen element is preferably 0.5 molar equivalents or less, and more preferably 0.25 molar equivalents or less, from the viewpoint of the stability of the obtained sulfide solid electrolyte. In the case where the powder raw material contains two or more kinds of halogen elements, the total content thereof preferably satisfies the above molar equivalent range.

In the sulfide solid electrolyte obtained by the production method according to the present embodiment, the molar ratio (P/X) of P to the total amount X of P, Sn, Si, and Sb contained in the sulfide solid electrolyte is preferably 0.1 or more and 0.9 or less. When the P/X is 0.1 or more, battery characteristics are good. When the P/X is 0.9 or less, water resistance is good. The P/X is more preferably 0.1 or more, still more preferably 0.25 or more, particularly preferably 0.4 or more, and is more preferably 0.9 or less, still more preferably 0.75 or less, and particularly preferably 0.5 or less.

The sulfide solid electrolyte obtained by the production method according to the present embodiment preferably contains iodine from the viewpoint of improving the ion conductivity and improving reduction resistance.

As described above, by substituting PS₄ in the sulfide solid electrolyte with SnS₄ or the like having another tetrahedral structure, the meltability of a raw material is deteriorated due to, for example, an increase in melting point of the raw material. Therefore, in the related art, when the sulfide solid electrolyte is produced by a melting method, it is necessary to increase the heating temperature, resulting in volatilization of iodine and making it impossible to obtain a sulfide solid electrolyte containing a sufficient amount of iodine. On the other hand, in the present invention, as described above, since the meltability of the raw material can be improved, it is not necessary to excessively increase the heating temperature and a sulfide solid electrolyte containing a sufficient amount of iodine can be obtained.

The sulfide solid electrolyte obtained by the production method according to the present embodiment contains iodine in an amount of preferably 0.001 to 0.1 molar equivalents, more preferably 0.01 to 0.05 molar equivalents, and still more preferably 0.02 to 0.04 molar equivalents.

Depending on the purpose, the sulfide solid electrolyte obtained by the production method according to the present embodiment may be an amorphous sulfide solid electrolyte, a sulfide solid electrolyte having a specific crystal structure, or a sulfide solid electrolyte having a crystal phase and an amorphous phase. The crystal phase is more preferably an argyrodite type crystal phase from the viewpoint of the lithium ion conductivity.

The sulfide solid electrolyte obtained by the production method according to the present embodiment preferably contains at least Sb among the elements of Sn, Si, and Sb from the viewpoint of the ion conductivity.

The sulfide solid electrolyte obtained by the production method according to the present embodiment has a lithium ion conductivity of preferably 5.0 × 10⁻¹ mS/cm or more, and more preferably 1.0 mS/cm or more, from the viewpoint of the battery characteristics when used in a lithium ion secondary battery.

The lithium ion conductivity in the present description is a value measured by electrochemical impedance spectroscopy (for example, potentiostat/galvanostat VSP, manufactured by Bio-Logic Sciences Instruments) under the following conditions: measurement frequency: 100 Hz to 1 MHz, measurement voltage: 100 mV, measurement temperature: 25°C.

The sulfide solid electrolyte obtained by the production method according to the present embodiment can be identified by analyzing the crystal structure by X-ray diffraction (XRD) measurement, and analyzing the elemental composition using various methods such as ICP emission spectrometry, atomic absorption spectrometry, and ion chromatography. For example, P, Si, Sn, Sb, and S can be measured by ICP emission spectrometry, Li can be measured by atomic absorption spectrometry, and Ha can be measured by ion chromatography.

### <<Second Embodiment: Method for Producing Sulfide Solid Electrolyte>>

A method for producing a sulfide solid electrolyte according to a second embodiment is a method for producing a sulfide solid electrolyte including adding a Ha compound to a sulfide solid electrolyte raw material in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and cooling and solidifying the obtained melt.

(Ha in the Ha compound, Ha₂, and HHa represents at least one element selected from halogen elements.)

According to the studies of the present inventors, it has been found that the meltability of the raw material can be improved by adding a Ha compound to the sulfide solid electrolyte raw material in an amount in excess of the target composition of the sulfide solid electrolyte to be produced. Such a mechanism of action is not clear, but is presumed as follows.

That is, it is presumed that the halide raw material having a low melting point promotes the melting reaction. Since the Ha compound added in excess relative to the target composition may inhibit the ion conduction path, at least a part of the excess Ha compound is volatilized as Ha₂ or HHa. The present embodiment is not construed as being limited to the above mechanism of action.

As shown in FIG. 2, the method for producing a sulfide solid electrolyte according to the second embodiment includes the following steps.

(Step S21) Step of adding a Ha compound to a sulfide solid electrolyte raw material in an amount in excess of a target composition of the sulfide solid electrolyte to be produced, heating and melting the raw material in a gas atmosphere containing a sulfur element or a halogen element, and volatilizing at least a part of the excess Ha compound relative to the target composition as Ha₂ or HHa

(Step S22) Step of cooling and solidifying the obtained melt
Hereinafter, each step is described.

<Step S21: Step of Adding Ha Compound to Sulfide Solid Electrolyte Raw Material in Amount in Excess of Target Composition of Sulfide Solid Electrolyte to be Produced, Heating and Melting Raw Material in Gas Atmosphere Containing Sulfur Element or Halogen Element, and Volatilizing at Least Part of Excess Ha Compound Relative to Target Composition as Ha₂ or HHa>

### · Sulfide Solid Electrolyte Raw Material

As the sulfide solid electrolyte raw material, the raw materials described in the first embodiment (the present raw materials) can be used. For example, a sulfide solid electrolyte raw material containing at least one element of Sn, Si, and Sb may be used, or other raw materials may be used.

### · Ha Compound

Examples of the Ha compound to be added to the sulfide solid electrolyte raw material include a LiHa, a Ha₂, and a HHa. The Ha₂ and the HHa are added as gases.

The Ha compound is preferably a LiHa. Examples of the LiHa include LiI, LiBr, and LiCl, and among these, LiI is particularly preferred from the viewpoint of ease of volatilization. By using the easily volatilized LiHa compound, as to be described later, the compound is easily volatilized as Ha₂ or HHa after the heating and melting. In the case where a LiHa is used, the amount of Li in the sulfide solid electrolyte raw material is preferably adjusted such that Li is not excessive in the obtained sulfide solid electrolyte.

Examples of the Ha₂ include Cl₂, F₂, Br₂, and I₂.

Examples of the HHa include HCl, HF, HBr, and HI.

The Ha compound is added in an amount in excess of the target composition of the sulfide solid electrolyte to be produced by the method according to the present embodiment. Accordingly, the meltability of the raw material can be improved. Here, the "target composition" means the composition of the sulfide solid electrolyte to be produced by the method according to the present embodiment, and means, for example, Li_{3.3}[P_{0.7}Sn_{0.3}]S₄. The "Ha compound in an amount in excess of the target composition of the sulfide solid electrolyte to be produced" specifically means that the measured value in composition analysis of the obtained solid electrolyte is larger than the charged value described in Table 1 in Examples to be described later.

The Ha compound is preferably added in an amount of 1.001 times or more, more preferably 1.01 times or more, and still more preferably 1.04 times or more, relative to the target composition of the sulfide solid electrolyte to be produced, and is also preferably added in an amount of 2 times or less, more preferably 1.8 times or less, and still more preferably 1.5 times or less.

### · Heating and Melting

In the step S21 in the present embodiment, for example, a Ha compound is added to the sulfide solid electrolyte raw material in a heating furnace, followed by heating and melting in a gas atmosphere containing a sulfur element or a halogen element.

As the heating and melting conditions and the like, those described above in the first embodiment can be adopted as is.

Among these, as described later, in order to volatilize at least a part of the Ha compound added in excess relative to the target composition as Ha₂ or HHa, it is preferable to extend the melting time or substitute the atmosphere in the furnace as the heating and melting conditions.

The heating and melting of the sulfide solid electrolyte raw material is performed in a gas atmosphere containing a sulfur element or a halogen element.

By performing the heating and melting in a gas atmosphere containing a sulfur element or a halogen element, sulfur or halogen is introduced into the obtained melt, making it possible to prevent a change in sulfur or halogen composition due to volatilization. The gas atmosphere containing a sulfur element or a halogen element also serves as a supply source of sulfur or halogen to the raw materials, and can promote the melting and enable the target composition to be achieved. Examples of the sulfur element-containing gas include a gas containing a compound containing the sulfur element or elemental sulfur, such as a sulfur gas, a hydrogen sulfide gas, and a carbon disulfide gas. Examples of the halogen element-containing gas include a gas containing an elemental halogen, a hydrogen halide gas, and a gas containing a metal halide element.

In the step S21 in the present embodiment, at least a part of the Ha compound added in excess relative to the target composition is volatilized as Ha₂ or HHa.

In the case where the Ha compound is a LiHa, at least a part of the excess LiHa is volatilized as Ha₂ or HHa. Specifically, in the case where the LiHa is LiI, at least a part of the excess LiI is volatilized as I₂ or HI.

In the case where the Ha compound is a Ha₂, at least a part of the excess Ha₂ is volatilized as Ha₂ or HHa. Specifically, in the case where the Ha₂ is Cl₂, at least a part of the excess Cl₂ is volatilized as Cl₂ or HCl.

In the case where the Ha compound is a HHa, at least a part of the excess HHa is volatilized as Ha₂ or HHa. Specifically, in the case where the HHa is HCl, at least a part of the excess HCl is volatilized as Cl₂ or HCl.

### <Step S22: Step of Cooling and Solidifying Obtained Melt>

In the step S22 in the present embodiment, the melt obtained in the step S21 is cooled and solidified. As the cooling and solidification conditions and the like, those described above in the first embodiment can be adopted as is.

### <<Third Embodiment: Method for Producing Sulfide Solid Electrolyte>>

A method for producing a sulfide solid electrolyte according to a third embodiment includes adding a LiHa compound to a sulfide solid electrolyte raw material containing at least one element of Sn, Si, and Sb in an amount in excess of a target composition of the sulfide solid electrolyte to be produced by the method, heating and melting the raw material in a gas atmosphere containing a sulfur element or a halogen element, and volatilizing at least a part of the excess LiHa compound relative to the target composition as Ha₂ or HHa; and cooling and solidifying the obtained melt to produce a sulfide solid electrolyte containing at least one element of Sn, Si, and Sb, in which by the heating and melting, the valence of the element contained in the sulfide solid electrolyte raw material is increased.

(Ha in the LiHa compound, Ha₂, and HHa represents at least one element selected from a halogen element.)

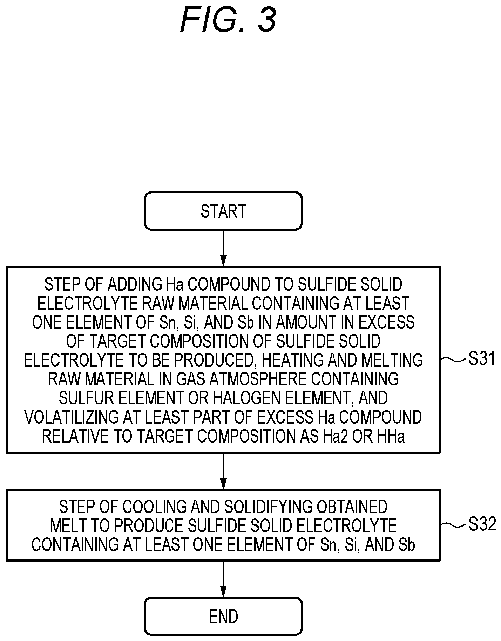

As shown in FIG. 3, the method for producing a sulfide solid electrolyte according to the third embodiment includes the following steps.

(Step S31) Step of adding a LiHa compound to a sulfide solid electrolyte raw material containing at least one element of Sn, Si, and Sb in an amount in excess of a target composition of the sulfide solid electrolyte to be produced, heating and melting the raw material in a gas atmosphere containing a sulfur element or a halogen element, and volatilizing at least a part of the excess LiHa compound relative to the target composition as Ha₂ or HHa

(Step S32) Step of cooling and solidifying the obtained melt to produce a sulfide solid electrolyte containing at least one element of Sn, Si, and Sb

Hereinafter, each step is described.

<Step S31: Step of Adding LiHa Compound to Sulfide Solid Electrolyte Raw Material Containing at Least One Element of Sn, Si, And Sb in Amount in Excess of Target Composition of Sulfide Solid Electrolyte to Be Produced, Heating and Melting Raw Material in Gas Atmosphere Containing Sulfur Element or Halogen Element, and Volatilizing at Least Part of Excess LiHa Compound Relative to Target Composition as Ha₂ or HHa>

The step S31 is an embodiment in which the step S11 in the first embodiment and the step S21 in the second embodiment are combined, and those described above in the step S11 in the first embodiment and the step S21 in the second embodiment can be adopted as they are.

<Step S32: Step of Cooling and Solidifying Obtained Melt to Produce Sulfide Solid Electrolyte Containing at Least One Element of Sn, Si, and Sb>

The step S32 is an embodiment in which the step S12 in the first embodiment and the step S22 in the second embodiment are combined, and those described above in the step S12 in the first embodiment and the step S22 in the second embodiment can be adopted as they are.

The present invention is not limited to the above embodiments, and various modifications can be adopted within the scope of the present invention. For example, the present invention is not limited to the above embodiments, and may be appropriately modified and improved. In addition, the material, shape, size, number, arrangement place, and the like of each component in the above embodiments are optional as long as the present invention can be achieved, and are not limited.

As described above, the following matters are disclosed in the present description.
1. A method for producing a sulfide solid electrolyte, the method including:
   heating and melting a sulfide solid electrolyte raw material containing at least one element of Sn, Si, and Sb in a sulfur element-containing gas atmosphere; and
   cooling and solidifying an obtained melt to produce a sulfide solid electrolyte comprising at least one element of Sn, Si, and Sb,
   in which by the heating and melting, a valence of the element contained in the sulfide solid electrolyte raw material is increased.
2. A method for producing a sulfide solid electrolyte, the method including:
   adding a Ha compound to a sulfide solid electrolyte raw material in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and
   cooling and solidifying an obtained melt,
   in which Ha in the Ha compound, Ha₂, and HHa represents at least one element selected from halogen elements.
3. A method for producing a sulfide solid electrolyte, the method including:
   adding a Ha compound to a sulfide solid electrolyte raw material containing at least one element of Sn, Si, and Sb in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and
   cooling and solidifying an obtained melt to produce a sulfide solid electrolyte containing at least one element of Sn, Si, and Sb,
   in which by the heating and melting, a valence of the element contained in the sulfide solid electrolyte raw material is increased, and
   in which Ha in the Ha compound, Ha₂, and HHa represents at least one element selected from halogen elements.
4. The method for producing a sulfide solid electrolyte according to the above 2 or 3, in which the Ha compound is a LiHa.
5. The method for producing a sulfide solid electrolyte according to the above 4, in which the LiHa is LiI.
6. The method for producing a sulfide solid electrolyte according to the above 1 or 3, in which a molar ratio (P/X) of P to a total amount X of P, Sn, Si, and Sb contained in the sulfide solid electrolyte to be produced by the method is 0.1 or more and 0.9 or less.
7. The method for producing a sulfide solid electrolyte according to the above 6, in which the sulfide solid electrolyte to be produced by the method contains iodine.

### EXAMPLES

Hereinafter, the present invention is described in detail with reference to Examples, but the present invention is not limited thereto. Examples 1, 3, 4, 6, 7, 8, and 11 are Inventive Examples, and Examples 2, 5, 9, and 10 are Comparative Examples.

### <Synthesis of Sulfide Solid Electrolyte>

### Example 1

In a glove box adjusted to a nitrogen atmosphere environment at a dew point of -50°C, respective raw material powders of Li₂S (purity: 99.98%, manufactured by Sigma), P₂S₅ (purity: 99%, manufactured by Sigma), Sn (purity: 99%, manufactured by Sigma), and S (purity: 99.98%, manufactured by Sigma) were blended and mixed well in a mortar so as to have the charged composition (target composition) in Table 1, and 1 g of the obtained mixture was placed in a quartz test tube, melted at 720°C for 1 hour, and then removed. During the melting, the melting was performed while feeding 10 vol% of a sulfur gas. The composition of the obtained sulfide solid electrolyte was (Li_{3.3}[P_{0.7}Sn_{0.3}]S₄).

### Example 2

The sulfide solid electrolyte (Li_{3.3}[P_{0.7}Sn_{0.3}]S₄) in Example 2 was obtained in the same manner as in Example 1 except that Li₂S (purity: 99.98%, manufactured by Sigma), P₂S₅ (purity: 99%, manufactured by Sigma), and SnS₂ (purity: 99.5%, manufactured by Mitsuwa Chemicals Co., Ltd.) were used as raw material powders, and the melting temperature was set to 750°C.

### Example 3

The sulfide solid electrolyte (Li_{6.5}[P_{0.25}Si_{0.3}Sn_{0.2}Sb_{0.25}]S₅I) in Example 3 was obtained in the same manner as in Example 1 except that Li₂S (purity: 99.98%, manufactured by Sigma), P₂S₅ (purity: 99%, manufactured by Sigma), Sn (purity: 99%, manufactured by Sigma), S (purity: 99.98%, manufactured by Sigma), Si (purity: 99.9%, manufactured by FUJIFILM Wako Pure Chemical Corporation), Sb₂S₃ (purity: 99.98%, manufactured by Mitsuwa Chemicals Co., Ltd.), and LiI (purity: 99.9%, low-moisture grade, manufactured by Tokyo Chemical Industry Co., Ltd.) were used as raw material powders and were blended so as to have the charged composition (mol) in Table 1, and the melting temperature was set to 700°C.

### Example 4

The sulfide solid electrolyte (Li_{6.5}[P_{0.25}Si_{0.3}Sn_{0.2}Sb_{0.25}]S₅I) in Example 4 was obtained in the same manner as in Example 3 except that the amount of LiI was increased by 10 wt% and the amounts of Li₂S and S were adjusted in the raw material powders used in Example 3, the raw material powders were blended so as to have the charged composition (target composition) in Table 1 except for iodine, and the melting temperature was set to 680°C. Although the obtained composition contained a large amount of iodine, it was equivalent to the charged composition.

### Example 5

The sulfide solid electrolyte (Li_{6.5}[P_{0.25}Si_{0.3}Sn_{0.2}Sb_{0.25}]S₅I) in Example 5 was obtained in the same manner as in Example 3 except that Li₂S (purity: 99.98%, manufactured by Sigma), P₂S₅ (purity: 99%, manufactured by Sigma), SnS₂ (purity: 99.5%, manufactured by Mitsuwa Chemicals Co., Ltd.), SiS₂ (purity: 99%, manufactured by Mitsuwa Chemicals Co., Ltd.), Sb₂S₅ (purity: 98%, manufactured by Strem Chemicals, Inc.), and LiI (purity: 99.9%, low-moisture grade, manufactured by Tokyo Chemical Industry Co., Ltd.) were used as raw material powders, and the melting temperature was set to 730°C.

### Example 6

The sulfide solid electrolyte (Li_{6.5}[P_{0.25}Si_{0.3}Sn_{0.2}Sb_{0.25}]S₅I) in Example 6 was obtained in the same manner as in Example 3 except that Li₂S (purity: 99.98%, manufactured by Sigma), P₂S₅ (purity: 99%, manufactured by Sigma), S (purity: 99.98%, manufactured by Sigma), SnS₂ (purity: 99.5%, manufactured by Mitsuwa Chemicals Co., Ltd.), SiS₂ (purity: 99%, manufactured by Mitsuwa Chemicals Co., Ltd.), Sb₂S₅ (purity: 98%, manufactured by Strem Chemicals, Inc.), and LiI (purity: 99.9%, low-moisture grade, manufactured by Tokyo Chemical Industry Co., Ltd.) were used as the raw material powders, the amount of LiI was increased by 10 wt% and the amounts of Li₂S and S were adjusted in the raw material powders used in Example 3, and the raw material powders were blended so as to have the charged composition (target composition) in Table 1 except for iodine. Although the obtained composition contained a large amount of iodine, it was equivalent to the charged composition.

### Example 7

The sulfide solid electrolyte (Li_{6.6}[Si_{0.6}Sb_{0.4}]S₅I) in Example 7 was obtained in the same manner as in Example 1 except that Li₂S (purity: 99.98%, manufactured by Sigma), Si (purity: 99.9%, manufactured by FUJIFILM Wako Pure Chemical Corporation), Sb₂S₃ (purity: 99.98%, manufactured by Mitsuwa Chemicals Co., Ltd.), S (purity: 99.98%, manufactured by Sigma), and LiI (purity: 99.9%, low-moisture grade, manufactured by Tokyo Chemical Industry Co., Ltd.) were used as raw material powders and were blended so as to have the charged composition (target composition) in Table 1, and the melting temperature was set to 750°C.

### Example 8

The sulfide solid electrolyte (Li_{6.6}[Si_{0.6}Sb_{0.4}]S₅I) in Example 8 was obtained in the same manner as in Example 7 except that the amount of LiI was increased by 10 wt% and the amounts of Li₂S and S were adjusted in the raw material powders used in Example 7, the raw material powders were blended so as to have the charged composition (target composition) in Table 1 except for iodine, and the melting temperature was set to 720°C. Although the obtained composition contained a large amount of iodine, it was equivalent to the charged composition.

### Example 9

The sulfide solid electrolyte (Li_{6.6}[Si_{0.6}Sb_{0.4}]S₅I) in Example 9 was obtained in the same manner as in Example 7 except that Li₂S (purity: 99.98%, manufactured by Sigma), S (purity: 99.98%, manufactured by Sigma), LiI (purity: 99.9%, low-moisture grade, manufactured by Tokyo Chemical Industry Co., Ltd.), SiS₂ (purity: 99%, manufactured by Mitsuwa Chemicals Co., Ltd.), and Sb₂S₅ (purity: 98%, manufactured by Strem Chemicals, Inc.) were used as raw material powders. Although the obtained composition contained a large amount of iodine, it was equivalent to the charged composition.

### Example 10

In a glove box adjusted to a nitrogen atmosphere environment at a dew point of -50°C, respective raw material powders of LiCl and YCl₃ (purity: 99.99%, manufactured by Sigma) were blended and mixed well in a mortar so as to have the charged composition (target composition) in Table 1, and 1 g of the obtained mixture was placed in a quartz test tube, melted at 600°C for 1 hour, and then removed. The composition of the obtained solid electrolyte in Example 10 was (Li₃YCl₆).

### Example 11

The solid electrolyte (Li₃YCl₆) in Example 11 was obtained in the same manner as in Example 10 except that the melting was performed while feeding 1 vol% of a chlorine gas during the melting. The composition of the obtained solid electrolyte in Example 11 was the same as the charged composition (target composition) except for chlorine.

### <Valence>

The valence of antimony (Sb), the valence of tin (Sn), and the valence of silicon (Si) in the obtained sulfide solid electrolyte were clarified by performing structural analysis of the XRD pattern of the obtained crystal and examining the coordination number and the coordination distance of the element. The valences were also clarified by Raman spectroscopy and by comparison with a database.

### <Meltability Test>

In the heating and melting step when producing the sulfide solid electrolytes in Examples 1 to 8, the temperature was sequentially increased from 650°C by 10°C, and the meltability was evaluated by fluidity of the heated material and unmelted residue of the raw materials. In the heating and melting step when producing the sulfide solid electrolytes in Examples 10 and 11, the temperature was sequentially increased from 550°C by 10°C, and the meltability was evaluated by fluidity of the heated material and unmelted residue of the raw materials.

For the fluidity of the heated material, the quartz test tube was tilted, and the temperature when the liquid surface followed the tilt was defined as the flow onset temperature.

For the unmelted residue of the raw materials, the sample was taken out at the flow onset temperature described above, and it was determined by XRD evaluation whether any unmelted raw materials were present (specifically, Li₂S, P₂S₅, and MSx excluding LiHa). The XRD evaluation was performed using an X-ray diffractometer (SmartLab, manufactured by Rigaku Corporation) under the following conditions in an atmosphere not exposed to the air.
Radiation Source: CuKα ray (λ = 1.5418 Å),
tube voltage: 45 kV,
tube current: 200 mA,
scanning angle: 10° to 100°,
scanning speed: 5°/min, and
step width: 0.01°/step.

The results of the flow onset temperature and the presence or absence of unmelted residue of the raw materials in each example are shown in Table 1.

### <Lithium Ion Conductivity Evaluation>

The sulfide solid electrolyte obtained in each example was further crushed in a mortar and passed through a sieve having a mesh of 100 µm to obtain a sulfide solid electrolyte powder having a D50 of 20 µm in a volume-based particle diameter distribution measured by a laser diffraction particle diameter distribution measurement method, and the powder was formed into a powder compact at a pressure of 380 kN as a measurement sample. The lithium ion conductivity was measured by electrochemical impedance spectroscopy (potentiostat/galvanostat VSP, manufactured by Bio-Logic Sciences Instruments).

Measurement conditions were a measurement frequency of 100 Hz to 1 MHz, a measurement voltage of 100 mV, and a measurement temperature of 25°C.

The lithium ion conductivity in each example is shown in Table 1.

**[Table 1]**

| | Sulfide solid electrolyte | | Starting material | | |
|---|---|---|---|---|---|
| | Charged composition (mol) | P/X^{*1} | Raw material (valence change) | Excess Ha | Excess amount |
| Example 1 | Li3.3[P0.7Sn0.3]S4 | 0.70 | Sn (0 ⇒ 4) | - | - |
| Example 2 | Li3.3[P0.7Sn0.3]S4 | 0.70 | Sn (4 ⇒ 4) | - | - |
| Example 3 | Li6.5[P0.25Si0.3Sn0.2Sb0.25]S5I | 0.25 | Si (0 ⇒ 4) | - | - |
| | | | Sn (0 ⇒ 4) | | |
| | | | Sb (3 ⇒ 5) | | |
| Example 4 | Li6.5[P0.25Si0.3Sn0.2Sb0.25]S5I | 0.25 | Si (0 ⇒ 4) | LiI | 10 wt% |
| | | | Sn (0 ⇒ 4) | | |
| | | | Sb (3 ⇒ 5) | | |
| Example 5 | Li6.5[P0.25Si0.3Sn0.2Sb0.25]S5I | 0.25 | Si (4 ⇒ 4) | - | - |
| | | | Sn (4 ⇒ 4) | | |
| | | | Sb (5 ⇒ 5) | | |
| Example 6 | Li6.5[P0.25Si0.3Sn0.2Sb0.25]S5I | 0.25 | Si (4 ⇒ 4) | LiI | 10 wt% |
| | | | Sn (4 ⇒ 4) | | |
| | | | Sb (5 ⇒ 5) | | |
| Example 7 | Li6.6[Si0.6Sb0.4]S5I | 0.00 | Si (0 ⇒ 4) | - | - |
| | | | Sb (3 ⇒ 5) | | |
| Example 8 | Li6.6[Si0.6Sb0.4]S5I | 0.00 | Si (0 ⇒ 4) | LiI | 10 wt% |
| | | | Sb (3 ⇒ 5) | | |
| Example 9 | Li6.6[Si0.6Sb0.4]S5I | 0.00 | Si (4 ⇒ 4) | - | - |
| | | | Sb (5 ⇒ 5) | | |
| Example 10 | Li3YCl6 | - | - | - | - |
| Example 11 | Li3YCl6 | - | - | Cl₂ | Gas supply |

**(Table 1 continued)**

| | Meltability test | | Ion conductivity |
|---|---|---|---|
| | Flow onset temperature | Unmelted residue of raw material | mS/cm |
| Example 1 | 720°C | No | 0.8 |
| Example 2 | > 750°C | Yes | 0.1 |
| Example 3 | 700°C | No | 0.8 |
| Example 4 | 680°C | No | 0.7 |
| Example 5 | 730°C | No | 0.05 |
| Example 6 | 700°C | No | 0.6 |
| Example 7 | 750°C | No | 1.3 |
| Example 8 | 720°C | No | 1.7 |
| Example 9 | > 750°C | Yes | 0.2 |
| Example 10 | 600°C | No | 0.05 |
| Example 11 | 570°C | No | 0.4 |

In Example 1, the valence of Sn in the starting material was 0, and the valence of Sn in the obtained sulfide solid electrolyte was 4, which was greater than the valence in the starting material. On the other hand, in Example 2, the valence of Sn in the starting material was 4, and the valence of Sn in the obtained sulfide solid electrolyte was also 4, which did not increase from the valence in the starting material. Therefore, in Example 1, the flow onset temperature was lower than that in Example 2, and there was no unmelted residue of the raw materials, resulting in high meltability. In addition, the ion conductivity in Example 1 was higher than that in Example 2.

In Examples 3 and 4, the valences of Si, Sn, and Sb in the starting material were 0, 0, and 3, respectively, and the valences of Si, Sn, and Sb in the obtained sulfide solid electrolyte were 4, 4, and 5, respectively, and each of Si, Sn, and Sb had a valence greater than that in the starting material. On the other hand, in Example 5, the valences of Si, Sn, and Sb in the starting material were 4, 4, and 5, respectively, and the valences of Si, Sn, and Sb in the obtained sulfide solid electrolyte were also 4, 4, and 5, respectively, which did not increase from the valences in the starting material. Therefore, in Examples 3 and 4, the flow onset temperature was lower than that in Example 5, and there was no unmelted residue of the raw materials, resulting in high meltability. In addition, the ion conductivity in Examples 3 and 4 was higher than that in Example 5. In particular, in Example 4, LiI in excess of the target composition was added and I in the excess LiI was volatilized as I₂, so that the flow onset temperature was lower than that in Example 3.

In Example 6, LiI in excess of the target composition was added and I in the excess LiI was volatilized as I₂, so that the flow onset temperature was lower than in Example 5, and there was no unmelted residue of the raw materials, resulting in high meltability.

In Examples 7 and 8, the valences of Si and Sb in the starting material were 0 and 3, respectively, and the valences of Si and Sb in the obtained sulfide solid electrolyte were 4 and 5, respectively, which were greater than the valences in the starting material. On the other hand, in Example 9, the valences of Si and Sb in the starting material were 4 and 5, respectively, and the valences of Si and Sb in the obtained sulfide solid electrolyte were also 4 and 5, which did not increase from the valences in the starting material. Therefore, in Examples 7 and 8, the flow onset temperature was lower than that in Example 9, and there was no unmelted residue of the raw materials, resulting in high meltability. In addition, the ion conductivity in Examples 7 and 8 was higher than that in Example 9. In particular, in Example 8, LiI in excess of the target composition was added and I in the excess LiI was volatilized as I₂, so that the flow onset temperature was lower than that in Example 7.

In Example 11, since a Cl₂ gas was introduced during the melting to volatilize excess Cl₂, the flow onset temperature was lower and the ion conductivity was higher than in Example 10 in which such a treatment was not performed.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-212391) filed on December 15, 2023, the content of which is incorporated herein by reference.

## Claims

1. A method for producing a sulfide solid electrolyte, the method comprising:
heating and melting a sulfide solid electrolyte raw material comprising at least one element of Sn, Si, and Sb in a sulfur element-containing gas atmosphere; and
cooling and solidifying an obtained melt to produce a sulfide solid electrolyte comprising at least one element of Sn, Si, and Sb,
wherein by the heating and melting, a valence of the element contained in the sulfide solid electrolyte raw material is increased.

2. A method for producing a sulfide solid electrolyte, the method comprising:
adding a Ha compound to a sulfide solid electrolyte raw material in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and
cooling and solidifying an obtained melt,
wherein Ha in the Ha compound, Ha₂, and HHa represents at least one element selected from halogen elements.

3. A method for producing a sulfide solid electrolyte, the method comprising:
adding a Ha compound to a sulfide solid electrolyte raw material comprising at least one element of Sn, Si, and Sb in an amount in excess of a target composition of the sulfide solid electrolyte to be produced by the method, heating and melting the raw material in a gas atmosphere containing a sulfur element or a halogen element, and volatilizing at least a part of the excess Ha compound relative to the target composition as Ha₂ or HHa; and
cooling and solidifying an obtained melt to produce a sulfide solid electrolyte comprising at least one element of Sn, Si, and Sb,
wherein by the heating and melting, a valence of the element contained in the sulfide solid electrolyte raw material is increased, and
wherein Ha in the Ha compound, Ha₂, and HHa represents at least one element selected from halogen elements.

4. The method for producing a sulfide solid electrolyte according to claim 2 or 3, wherein the Ha compound is a LiHa.

5. The method for producing a sulfide solid electrolyte according to claim 4, wherein the LiHa is LiI.

6. The method for producing a sulfide solid electrolyte according to claim 1 or 3, wherein a molar ratio (P/X) of P to a total amount X of P, Sn, Si, and Sb contained in the sulfide solid electrolyte to be produced by the method is 0.1 or more and 0.9 or less.

7. The method for producing a sulfide solid electrolyte according to claim 6, wherein the sulfide solid electrolyte to be produced by the method comprises iodine.
